(19) **Europäisches Patentamt / European Patent Office / Office européen des brevets**

(11) **EP 3 719 071 A1**

(12) **EUROPEAN PATENT APPLICATION**
published in accordance with Art. 153(4) EPC

(43) Date of publication:
**07.10.2020 Bulletin 2020/41**

(21) Application number: **18881074.1**

(22) Date of filing: **26.11.2018**

(51) Int Cl.:
*C08L 23/34* (2006.01)     *C08J 3/07* (2006.01)
*C09J 123/34* (2006.01)     *C09J 161/12* (2006.01)
*D06M 15/227* (2006.01)     *D06M 15/41* (2006.01)

(86) International application number:
**PCT/JP2018/043311**

(87) International publication number:
**WO 2019/103133 (31.05.2019 Gazette 2019/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2017  JP 2017227019**

(71) Applicant: **Sumitomo Seika Chemicals Co., Ltd.
Kako-gun, Hyogo 675-0145 (JP)**

(72) Inventors:
• **MIZUHASHI, Toshinari
Himeji-shi
Hyogo 672-8076 (JP)**

• **SANDA, Ikumi
Himeji-shi
Hyogo 672-8076 (JP)**
• **SAWADA, Kohei
Himeji-shi
Hyogo 672-8076 (JP)**
• **MIYAZAKI, Hiromasa
Kako-gun
Hyogo 675-0145 (JP)**

(74) Representative: **Vossius & Partner
Patentanwälte Rechtsanwälte mbB
Siebertstrasse 3
81675 München (DE)**

(54) **ANIONIC AQUEOUS DISPERSION, PRODUCTION METHOD THEREFOR, MOULDED ARTICLE, ADHESIVE LIQUID, RUBBER-REINFORCING FIBRES, AND RUBBER-REINFORCING FIBRE COMPOSITE**

(57)    Provided are an anionic aqueous dispersion that can form a film having excellent oil resistance and heat resistance, and a production method therefor. The anionic aqueous dispersion of chlorosulfonated polyethylene particles of the present invention comprises an aqueous medium, chlorosulfonated polyethylene particles, and an anionic surfactant. Chlorosulfonated polyethylene contained in the chlorosulfonated polyethylene particles comprises 40 to 60 mass% of a structural unit having chlorine.

EP 3 719 071 A1

**Description**

Technical Field

The present invention relates to an anionic aqueous dispersion and a production method therefor. The present invention also relates to a molded article, a resorcinol-formaldehyde-latex adhesive liquid, a rubber-reinforcing fiber, and a rubber-reinforcing fiber composite.

Background Art

A wide variety of rubber materials are used in industrial rubber products. Known examples of rubber materials include ethylene-propylene-diene rubber (EPDM), styrene-butadiene rubber (SBR), natural rubber (NR), nitrile butadiene rubber (NBR), hydrogenated acrylonitrile butadiene rubber (HNBR), chloroprene rubber (CR), and the like. Among these, HNBR has excellent properties, such as heat resistance, oil resistance, ozone resistance, abrasion resistance, and electrical properties, and is thus widely used for automotive parts, such as brake hoses and power transmission belts (e.g., V belts and timing belts). In addition, with the trend toward compact engines and energy savings becoming mainstream, the development of timing belts in oil that can be installed inside engines is also desired. Accordingly, rubber materials with higher oil resistance and heat resistance are required more than before.

Rubber materials for forming power transmission belts, such as timing belts, are combined with fibers, such as organic fibers (e.g., polyester, aramid, and polyamide) or glass fibers, as reinforcing agents, for the purpose of enhancing strength and durability. In this case, the rubber materials and the reinforcing fibers are bonded with adhesives.

As such adhesives, for example, there are proposals for adhesive materials containing rubber latex, such as resorcinol-formaldehyde-latex adhesives (hereinafter also referred to as "RFL adhesives") (e.g., PTL 1 to PTL 3), for the purpose of forming adhesive layers having excellent heat resistance, oil resistance, etc., in addition to adhesion. Resorcinol-formaldehyde-latex adhesives (RFL adhesives) are adhesives comprising resorcinol, formaldehyde, and latex. Known examples of latex include butadiene-styrene copolymer latex, dicarboxylated butadiene-styrene copolymer latex, vinylpyridine-butadiene-styrene terpolymer latex, chloroprene latex, chlorosulfonated polyethylene latex, HNBR latex, and the like.

Citation List

Patent Literature

PTL 1: JP2010-031194A
PTL 2: JP5816397B
PTL 3: JP5890950B

Summary of Invention

Technical Problem

However, even conventional adhesive materials containing rubber latex were not able to satisfy both oil resistance and heat resistance. For this reason, there has been a demand for adhesive materials having excellent oil resistance and heat resistance.

The present invention was made in view of the above, and an object of the present invention is to provide an anionic aqueous dispersion that can form a film having excellent oil resistance and heat resistance, and a production method therefor. Another object of the present invention is to provide a molded article formed using the anionic aqueous dispersion, a resorcinol-formaldehyde-latex adhesive liquid, a rubber-reinforcing fiber containing the adhesive liquid, and a rubber-reinforcing fiber composite.

Solution to Problem

The present inventors conducted intensive studies to achieve the above objects, and consequently found that these objects can be achieved by using chlorosulfonated polyethylene comprising a specific amount of a structural unit having chlorine in an anionic aqueous dispersion of chlorosulfonated polyethylene particles comprising an aqueous medium, chlorosulfonated polyethylene particles, and an anionic surfactant. Thus, the present invention has been completed.

That is, the present invention includes, for example, the main subjects described in the following items.

Item 1. An anionic aqueous dispersion of chlorosulfonated polyethylene particles comprising an aqueous medium, chlorosulfonated polyethylene particles, and an anionic surfactant, chlorosulfonated polyethylene contained in the chlorosulfonated polyethylene particles comprising 40 to 60 mass% of a structural unit having chlorine.

Item 2. The anionic aqueous dispersion according to Item 1, wherein the chlorosulfonated polyethylene has a property of exhibiting one or more endothermic peaks in the range of 50 to 100°C in differential scanning calorimetry at a temperature rising from 30°C to 200°C at 10°C/min.

Item 3. The anionic aqueous dispersion according to Item 1 or 2, further comprising a vulcanization accelerator.

Item 4. The anionic aqueous dispersion according to any one of Items 1 to 3, wherein the vulcanization accelerator comprises at least one compound selected from the group consisting of thiazole compounds, thiuram compounds, and dithiocarbamate compounds.

Item 5. The anionic aqueous dispersion according to any one of Items 1 to 4, wherein the vulcanization accelerator is contained in an amount of 0.5 to 5 parts by mass per 100 parts by mass of the chlorosulfonated polyethylene particles.

Item 6. The anionic aqueous dispersion according to any one of Items 1 to 5, wherein the anionic surfactant comprises at least one member selected from the group consisting of dialkyl sulfosuccinates, polyoxyalkylene alkyl ether sulfates, fatty acid salts, and alkylbenzene sulfonates.

Item 7. The anionic aqueous dispersion according to any one of Items 1 to 6, wherein the anionic surfactant is contained in an amount of 0.5 to 15 parts by mass per 100 parts by mass of the chlorosulfonated polyethylene particles.

Item 8. A method for producing an anionic aqueous dispersion of chlorosulfonated polyethylene particles, the method comprising:

obtaining an emulsion by mixing solution A, in which chlorosulfonated polyethylene is dissolved in an organic solvent, and solution B, in which an anionic surfactant is dissolved in an aqueous medium, and removing the organic solvent from the emulsion;
wherein the chlorosulfonated polyethylene comprises 40 to 60 mass% of a structural unit having chlorine.

Item 9. A molded article comprising a dried product of the anionic aqueous dispersion according to any one of Items 1 to 7.

Item 10. A resorcinol-formaldehyde-latex adhesive liquid comprising the anionic aqueous dispersion according to any one of Items 1 to 7 as a latex component.

Item 11. A rubber-reinforcing fiber comprising an adhesive component in the adhesive liquid according to Item 10 and a fiber.

Item 12. A rubber-reinforcing fiber composite comprising the rubber-reinforcing fiber according to Item 11 and an overcoat layer containing a rubber component.

Advantageous Effects of Invention

According to the anionic aqueous dispersion of the present invention, a film excellent in both oil resistance and heat resistance can be formed. Therefore, the anionic aqueous dispersion of the present invention can be suitably used, for example, as a raw material for adhesive materials, and can impart excellent oil resistance and heat resistance to an adhesive body formed after adhesion.

Description of Embodiments

Embodiments of the present invention are described in detail below. In the present specification, the terms "comprise" and "contain" include the concepts of "comprising," "containing," "consisting essentially of," and "consisting of."

The anionic aqueous dispersion of chlorosulfonated polyethylene particles of the present invention comprises an aqueous medium, chlorosulfonated polyethylene particles, and an anionic surfactant. Hereinafter, the anionic aqueous dispersion of chlorosulfonated polyethylene particles is simply referred to as the "anionic aqueous dispersion."

Chlorosulfonated polyethylene contained in the chlorosulfonated polyethylene particles comprises 40 to 60 mass% of a structural unit having chlorine. The chlorosulfonated polyethylene is a compound obtained by chlorinating polyethylene.

The chlorosulfonated polyethylene particles are particles containing chlorosulfonated polyethylene as a main component. The chlorosulfonated polyethylene particles contain 60 mass% or more, preferably 80 mass% or more, more preferably 90 mass% or more, and particularly preferably 99 mass% or more, of chlorosulfonated polyethylene. The chlorosulfonated polyethylene particles may be formed only of chlorosulfonated polyethylene.

As the chlorosulfonated polyethylene, for example, a commercially available product can be used. Alternatively, the chlorosulfonated polyethylene can be produced by a known method. In a method for producing chlorosulfonated polyethylene, for example, a solution obtained by dissolving polyethylene in tetrachlorinated carbon is exposed to a mixture of chlorine gas and sulfur dioxide at a specific temperature and pressure, and the tetrachlorinated carbon is then removed.

The chlorosulfonated polyethylene can be formed as having, for example, an ethylene structural unit and a structural unit having chlorine. The structural unit having chlorine is a structural unit having a chloro group on an ethylene side chain. In other words, the structural unit having chlorine is a structural unit for providing chlorine to the chlorosulfonated polyethylene. Further, the chlorosulfonated polyethylene may have a sulfonyl group. A sulfonyl group may be contained in the ethylene structural unit or the structural unit having chlorine, or may be contained in both structural units. Further, chlorine may be bonded to a sulfonyl group. In the chlorosulfonated polyethylene, the order of arrangement of the ethylene structural unit and the structural unit having chlorine is not particularly limited, and may be a random copolymer or a block copolymer.

When the chlorosulfonated polyethylene comprises 40 mass% or more of the structural unit having chlorine, molded articles, such as films, formed using the anionic aqueous dispersion can have excellent oil resistance. Further, when the chlorosulfonated polyethylene comprises 60 mass% or less of the structural unit having chlorine, the molded articles are less likely to harden, and they have excellent low-temperature characteristics. The chlorosulfonated polyethylene preferably comprises 40 to 50 mass%, and more preferably 40 to 45 mass%, of the structural unit having chlorine based on the total amount of structural units of the chlorosulfonated polyethylene.

The chlorosulfonated polyethylene preferably has a property of exhibiting one or more endothermic peaks in the range of 50 to 100°C in differential scanning calorimetry at a temperature rising from 30°C to 200°C at 10°C/min. In this case, it is indicated that in the chlorosulfonated polyethylene, crystallinity derived from polyethylene remains in the molecule.

Due to the polyethylene-derived crystallinity remaining in the chlorosulfonated polyethylene, molded articles, such as films, formed using the anionic aqueous dispersion can have excellent tensile strength as well as more excellent oil resistance.

The content of sulfur atoms contained in the chlorosulfonated polyethylene is not particularly limited, and is, for example, 0.5 to 2.0 mass%, and preferably 0.8 to 1.5 mass%, based on the total mass of the chlorosulfonated polyethylene particles.

The chlorosulfonated polyethylene may be a mixture of two or more types of chlorosulfonated polyethylene having different mass average molecular weights, chlorine contents, or sulfur contents.

The chlorosulfonated polyethylene may have, if necessary, a structure in which one or more of acrylonitrile, an epoxy group-containing compound, an acrylic compound, and the like are grafted. In this case, the oil resistance of the chlorosulfonated polyethylene can be greatly improved. The chlorosulfonated polyethylene having a grafted structure can be obtained, for example, by chlorination and chlorosulfonation of polyethylene, followed by grafting with acrylonitrile, an epoxy group-containing compound, an acrylic compound, and/or the like.

The epoxy group-containing compound is not limited as long as it is a compound containing an epoxy group. Examples include glycidyl acrylate, 4-hydroxybutyl acrylate glycidyl ether, glycidyl methacrylate, allyl glycidyl ether, and the like. These can be used alone or in combination of two or more. In terms of maintaining excellent physical properties and oil resistance, the epoxy group-containing compound preferably contains glycidyl methacrylate.

Examples of the acrylic compound include compounds containing an acryloyl group or a methacryloyl group. Specific examples of the acrylic compound include acrylates, such as methyl (meth)acrylate, ethyl (meth)acrylate, n-butyl (meth)acrylate, 2-ethylhexyl (meth)acrylate, n-pentyl (meth)acrylate, n-decyl (meth)acrylate, n-dodecyl (meth)acrylate, n-octadecyl (meth)acrylate, 2-methoxyethyl (meth)acrylate, and 2-ethoxyethyl (meth)acrylate; fluorine-containing (meth)acrylic acid compounds, such as 2,2,2-trifluoroethyl (meth)acrylate; glycidyl acrylate, 4-hydroxybutyl acrylate glycidyl ether, glycidyl methacrylate, and the like. These can be used alone or in combination of two or more. In terms of maintaining excellent physical properties and oil resistance, the acrylic compound preferably contains at least one of methyl acrylate, ethyl acrylate, 2-methoxyethyl acrylate, and n-butyl acrylate.

A compound other than the acrylonitrile, the epoxy group-containing compound, and the acrylic compound can be used to obtain grafted chlorosulfonated polyethylene. Examples of the other compound include alkyl vinyl ketone compounds, such as methyl vinyl ketone; alkyl vinyl ether compounds, such as vinyl ethyl ether; allyl ether compounds, such as allyl methyl ether; vinyl aromatic compounds, such as styrene, α-methylstyrene, chlorostyrene, vinyl toluene, and vinyl naphthalene; vinyl nitrile compounds, such as methacrylonitrile; vinyl acetate, vinyl chloroacetate, acrylamide, propylene, butadiene, isoprene, pentadiene, vinyl chloride, vinylidene chloride, vinyl fluoride, vinylidene fluoride, vinyl propionate, maleic anhydride, citraconic anhydride, itaconic anhydride, and the like. The other compound is preferably used in an amount of 20 wt.% or less based on the total amount of the compounds used for grafting.

The median particle size of the chlorosulfonated polyethylene particles is not particularly limited. For example, the median particle size of the chlorosulfonated polyethylene particles can be 0.1 to 5 $\mu$m. In this case, the viscosity of the anionic aqueous dispersion is less likely to increase, the static stability is excellent, and sedimentation or the like is less likely to occur; thus, the workability is likely to be improved.

The anionic surfactant contained in the anionic aqueous dispersion has an effect of emulsifying and dispersing the chlorosulfonated polyethylene in the aqueous dispersion medium.

The type of anionic surfactant is not particularly limited, and known anionic surfactants can be widely used. Specific examples of anionic surfactants include polyoxyalkylene alkyl ether sulfate, polyoxyalkylene alkyl phenyl ether sulfate, alkyl benzene sulfonate, alkyl naphthalene sulfonate, alkyl diphenyl sulfonate, $\alpha$-olefin sulfonate, alkyl sulfate ester salts, naphthalene sulfonate formaldehyde condensates, dialkyl sulfosuccinates, polyoxyethylene alkyl ether acetates, rosinates, fatty acid salts, and the like. These anionic surfactants can be used alone or in combination of two or more.

The anionic surfactant is preferably at least one member selected from the group consisting of dialkyl sulfosuccinates, polyoxyalkylene alkyl ether sulfates, fatty acid salts, and alkylbenzene sulfonates. In this case, an anionic aqueous dispersion having particularly excellent emulsification dispersibility is obtained, and such an anionic surfactant is inexpensive and easily available.

As the anionic surfactant, it is particularly preferable to use a polyoxyalkylene alkyl ether sulfate and a fatty acid salt in combination. In this case, the static stability of the anionic aqueous dispersion is particularly improved.

The polyoxyalkylene alkyl ether sulfate is, for example, a compound represented by the following formula (1):

$R^1(C_2H_4O)_h(C_3H_6O)_kSO_3X$ (1)

In formula (1), $R^1$ represents a $C_5$-$C_{24}$ alkyl or alkenyl group. h represents the number of moles of ethylene oxide units ($C_2H_4O$) added, and is an integer of 0 to 50. K represents the number of moles of propylene oxide units ($C_3H_6O$) added, and is an integer of 0 to 50. However, the sum of h and k is an integer of 2 to 50. X represents sodium, potassium, an amino group, or an ammonium group.

When the compound represented by formula (1) contains both ethylene oxide units and propylene oxide units, the arrangement order of the ethylene oxide units and the propylene oxide units is not particularly limited. That is, the ethylene oxide units and the propylene oxide units may be randomly arranged, or either of the units may be arranged in a block pattern.

Specific examples of the compound represented by formula (1) include polyoxyalkylene lauryl ether sulfates, polyoxyalkylene oleyl ether sulfates, and polyoxyalkylene alkyl ether sulfates ($C_{12}$-$C_{14}$ alkyl mixtures).

Specific examples of polyoxyalkylene lauryl ether sulfates include sodium polyoxyalkylene lauryl ether sulfates, such as sodium polyoxyethylene lauryl ether sulfate and sodium polyoxypropylene lauryl ether sulfate; ammonium polyoxyalkylene lauryl ether sulfates, such as ammonium polyoxyethylene lauryl ether sulfate; and the like.

Specific examples of polyoxyalkylene oleyl ether sulfates include sodium polyoxyalkylene oleyl ether sulfates, such as sodium polyoxyethylene oleyl ether sulfate and sodium polyoxypropylene oleyl ether sulfate; ammonium polyoxyalkylene oleyl ether sulfates, such as ammonium polyoxyethylene oleyl ether sulfate; and the like.

The polyoxyalkylene alkyl ether sulfate is more preferably a sodium salt, and particularly preferably sodium polyoxyethylene lauryl ether sulfate or polyoxyalkylene alkyl ether sulfate ($C_{12}$-$C_{14}$ alkyl mixtures).

The fatty acid salt is, for example, a compound represented by the following formula (2):

$$R^4COOM \qquad (2)$$

In formula (2), $R^4$ represents a $C_5$-$C_{24}$ alkyl or alkenyl group, and M represents sodium, potassium, an amino group, or an ammonium group.

Specific examples of the compound represented by formula (2) include oleates, stearates, laurates, myristates, palmitates, and the like. Among these, the fatty acid salt is preferably an oleate. The fatty acid salt may be a commercially available product, or may be obtained by reacting a fatty acid with a neutralizing agent, such as sodium hydroxide, potassium hydroxide, aqueous ammonia, alkanolamine, alkylamine, or morpholine.

The content of the anionic surfactant is preferably 0.5 to 15 parts by mass per 100 parts by mass of the chlorosulfonated polyethylene particles. In this case, an anionic aqueous dispersion in which chlorosulfonated polyethylene particles are stably dispersed can be easily obtained. Further, since the content of the anionic surfactant is 15 parts by mass or less per 100 parts by mass of the chlorosulfonated polyethylene particles, the chlorosulfonated polyethylene particles can be easily emulsified in the aqueous medium, physical properties, such as adhesion, are less likely to be impaired, and bleeding due to the surfactant is less likely to occur in molded articles, such as films. The lower limit of the content of the anionic surfactant is more preferably 2 parts by mass per 100 parts by mass of the chlorosulfonated polyethylene particles. The upper limit of the content of the anionic surfactant is more preferably 7 parts by mass per 100 parts by mass of the chlorosulfonated polyethylene particles.

The anionic aqueous dispersion of the present invention may further contain a vulcanization accelerator. In this case, the heat resistance of a molded article, such as a film, formed from the anionic aqueous dispersion is likely to be improved.

The type of vulcanization accelerator is not particularly limited, and known vulcanization accelerators etc. can be widely used. Examples include sulfur-based vulcanizing agents, zinc oxides, organic peroxides, and the like.

Examples of sulfur-based vulcanization accelerators include sulfur commonly used as a vulcanizing agent for rubber, such as powdered sulfur, highly dispersible sulfur, and insoluble sulfur; thiurams, such as tetramethylthiuram disulfide, tetraethylthiuram disulfide, tetrabutylthiuram disulfide, tetramethylthiuram monosulfide, and dipentamethylenethiuram tetrasulfide; dithiocarbamates, such as pentaethylenedithiocarbamate piperidine salt, pipecolyldithiocarbamate pipecoline salt, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, zinc dibenzyldithiocarbamate, sodium dimethyldithiocarbamate, sodium diethyldithiocarbamate, sodium dibutyldithiocarbamate, copper dimethyldithiocarbamate, ferric dimethyldithiocarbamate, and tellurium diethyldithiocarbamate; xanthates, such as zinc butyl xanthate, zinc isopropyl xanthate, and sodium isopropyl xanthate; sulfenamides, such as N-cyclohexyl-2-benzothiazole sulfenamide, N-t-butyl-2-benzothiazole sulfenamide, N-oxydiethylene-2-benzothiazole sulfenamide, and N,N-diisopropyl-2-benzothiazole sulfenamide; thiazoles, such as 2-mercaptobenzothiazole and dibenzothiazyl disulfide; and the like. These can be used alone or in combination of two or more.

The vulcanization accelerator may be water-soluble or water-insoluble, but is preferably water-soluble in terms of easily improving the heat resistance of the molded article. When the anionic aqueous dispersion contains a water-soluble vulcanization accelerator, the vulcanization accelerator is in a dissolved state. When the anionic aqueous dispersion contains a water-insoluble vulcanization accelerator, the vulcanization accelerator is in a dispersed state.

In particular, the vulcanization accelerator preferably contains at least one compound selected from the group consisting of thiazole compounds, thiuram compounds, and dithiocarbamate compounds. In this case, the heat resistance of the molded article is particularly likely to be improved. Among these, water-soluble vulcanization accelerators are particularly preferable.

The anionic aqueous dispersion preferably contains 0.5 to 5 parts by mass of vulcanization accelerator per 100 parts by mass of the chlorosulfonated polyethylene particles. In this case, the heat resistance of the molded article is particularly likely to be improved, and the molded article is likely to be prevented from becoming too hard.

When the vulcanization accelerator is an organic peroxide, examples include cumene hydroperoxide, di-t-butyl peroxide, t-butylcumyl peroxide, dicumyl peroxide, 2,5-dimethyl-2,5-di-(t-butylperoxy)hexane, 1,3-bis(t-butylperoxyisopropyl)benzene, n-butyl-4,4-bis(t-butylperoxy)valerate, 1,1-bis(t-butylperoxy)-3,3,5-trimethylcyclohexane, 2,2-bis(t-butylperoxy)butane, benzoyl peroxide, p-chlorobenzoyl peroxide, 2,4-dichlorobenzoyl peroxide, t-butylperoxybenzene, vinyl tris(t-butylperoxy)silane, and the like.

When an organic peroxide is used, the amount thereof used is generally preferably 0.1 to 1.0 mass%, more preferably 0.1 to 0.8 mass%, and particularly preferably 0.3 to 0.5 mass%, based on the chlorosulfonated polyethylene.

The dispersion medium of the anionic aqueous dispersion is an aqueous medium. The aqueous medium is preferably water, and various types of water, such as tap water, industrial water, ion-exchanged water, deionized water, and pure water, can be used. The aqueous medium is particularly preferably deionized water or pure water. The aqueous medium may contain a pH adjuster, a viscosity adjuster, a fungicide, etc., as long as the effects of the present invention are not impaired.

The solid content concentration of the anionic aqueous dispersion is not particularly limited, and can be suitably set according to the intended use. For example, the solid content concentration of the anionic aqueous dispersion may be 20 to 60 mass%, and preferably 25 to 50 mass%. Further, the pH of the anionic aqueous dispersion is also not particularly limited, and may be 7 to 10, for example.

The method for producing the anionic aqueous dispersion described above is not particularly limited, and known production methods can be widely used.

For example, the method for producing an anionic aqueous dispersion can comprise:

obtaining an emulsion by mixing solution A, in which chlorosulfonated polyethylene is dissolved in an organic solvent, and solution B, in which an anionic surfactant is dissolved in an aqueous medium; and

removing the organic solvent from the emulsion. Hereinafter, the former step is abbreviated as step 1, and the latter step is abbreviated as step 2. The chlorosulfonated polyethylene used in this production method is the same as described above, and thus comprises 40 to 60 mass% of a structural unit having chlorine.

The organic solvent used to prepare solution A of step 1 is not particularly limited. Examples of organic solvents include aliphatic hydrocarbons, such as hexane and heptane; alicyclic hydrocarbons, such as cyclohexane; aromatic hydrocarbons, such as benzene, toluene, and xylene; chlorinated hydrocarbons, such as chloroform and 1,2-dichloroethane; alcohols, such as methanol, ethanol, isopropyl alcohol, and t-butanol; and the like. The organic solvents can be used alone or as a mixture of two or more.

As the organic solvent, it is particularly preferable to use at least one of aromatic hydrocarbons and alicyclic hydrocarbons, both of which have excellent solubility of chlorosulfonated polyethylene, because the amount of chlorosulfonated polyethylene dissolved is likely to increase, and the productivity of the desired anionic aqueous dispersion can be enhanced.

The amount of the organic solvent used is not particularly limited. For example, the organic solvent can be used in such an amount that the concentration of chlorosulfonated polyethylene in solution A in step 1 is 3 to 20 mass%. In this case, the amount of the organic solvent used is less likely to increase, and the chlorosulfonated polyethylene is likely to be dissolved uniformly in the organic solvent. Accordingly, the emulsion obtained in step 1 has excellent stability, and aggregation of the chlorosulfonated polyethylene particles in the anionic aqueous dispersion is more likely to be suppressed. The organic solvent can be used in such an amount that the concentration of chlorosulfonated polyethylene in solution A is 12 to 16 mass%.

The method for preparing solution A is not particularly limited. For example, chlorosulfonated polyethylene can be added while controlling the temperature of the organic solvent to 100°C or lower.

The anionic surfactant and aqueous medium used to prepare solution B in step 1 are the same as described above. Solution B can be prepared by mixing an anionic surfactant and an aqueous medium. When two or more anionic surfactants are used in combination, each anionic surfactant can be sequentially added and dissolved in the aqueous medium, or the anionic surfactants can be mixed in advance and then added and dissolved in the aqueous medium.

The amount of the aqueous medium used in step 1 is not particularly limited. The aqueous dispersion medium can be used so that the concentration of the anionic surfactant in the aqueous medium is 0.1 to 50 mass%.

Further, the amount of the anionic surfactant used may be 0.1 to 15 parts by mass (preferably 0.5 to 15 parts by mass) per 100 parts by mass of the chlorosulfonated polyethylene used in step 1.

An emulsion can be obtained by mixing solutions A and B in step 1. The method for mixing solutions A and B is not particularly limited. For example, solutions A and B can be mixed by a method of stirring and mixing them using an emulsifier, such as a homogenizer or a colloid mill, or by a method of dispersing and mixing them using an ultrasonic disperser or the like.

Solutions A and B can be mixed, for example, at 5 to 70°C, and preferably at 35 to 60°C. The median particle size of the chlorosulfonated polyethylene particles can be controlled by the mixing conditions of solutions A and B.

In step 2, the organic solvent is removed from the emulsion obtained in step 1. As the method of removing the organic solvent, for example, a general method, e.g., heating the emulsion under reduced pressure, can be used.

The emulsion obtained after removing the organic solvent can be further concentrated to a desired solid content concentration, if necessary. The concentration method is not particularly limited. For example, a method such as heating concentration under reduced pressure or atmospheric pressure, centrifugation, filtration, or wet separation can be used. In particular, heating concentration under reduced pressure or concentration using a filtration membrane is preferable, because it is not necessary to apply heat and stress more than necessary to the emulsion, and the stability of the emulsion is less likely to be impaired.

The desired anionic aqueous dispersion is obtained through steps 1 and 2 described above.

After step 1 in the method for producing an anionic aqueous dispersion, the resulting anionic aqueous dispersion can have a pH of 2 to 7. In consideration of the dispersion stability of the anionic aqueous dispersion, the pH may be adjusted to 7 to 10, for example, by adding a neutralizing agent as necessary. Examples of neutralizing agents include sodium hydroxide, potassium hydroxide, calcium hydroxide, barium hydroxide, sodium carbonate, calcium oxide, and the like.

When the anionic aqueous dispersion contains such a vulcanization accelerator, for example, a desired amount of the vulcanization accelerator can be added to the anionic aqueous dispersion obtained in the production method comprising steps 1 and 2. Alternatively, depending on the type of vulcanization accelerator, the vulcanization accelerator may be added to either solution A or solution B.

In the method for producing an anionic aqueous dispersion, step 1 can be replaced with a step of preparing an emulsion by dissolving chlorosulfonated polyethylene and a fatty acid in an organic solvent, and adding and dispersing the organic solvent solution in an aqueous medium in which an anionic surfactant, other than fatty acid salts, and a drug for neutralizing fatty acids are dissolved. In this case, the amount of the aqueous medium and the amount of the neutralizing agent can be the same as those known in the art.

A dried product can be formed by removing the aqueous medium from the anionic aqueous dispersion of the present invention. This dried product is, for example, a molded article, such as a film, formed by removing the aqueous medium from the anionic aqueous dispersion, and contains at least chlorosulfonated polyethylene particles.

Molded articles, such as films, obtained by using the anionic aqueous dispersion of the present invention include dried products of the anionic aqueous dispersion; thus, the molded articles have excellent oil resistance and heat resistance, as well as adhesion.

When the anionic aqueous dispersion contains a vulcanization accelerator, the molded article obtained using the anionic aqueous dispersion of the present invention also contains the vulcanization accelerator. Therefore, the molded article can be vulcanized by a method such as heat treatment, and a vulcanized molded article can be obtained. The heat resistance of the molded article is thereby further improved.

The method for molding a molded article using the anionic aqueous dispersion of the present invention is not particularly limited, and known methods can be widely used. For example, when the molded article is a film, the film can be formed by spreading the anionic aqueous dispersion in a container or on a base material, followed by heat treatment. The film contains a dried product of the anionic aqueous dispersion. The vulcanization method is not particularly limited, and known methods, such as a heating press, can be widely used.

The shape of the molded article is not particularly limited. The molded article may be formed into various shapes, such as a plate shape and a block shape, in addition to the film mentioned above.

The anionic aqueous dispersion of the present invention can be applied, for example, to adhesive materials such as various adhesive liquids. That is, the anionic aqueous dispersion of the present invention can be an anionic aqueous dispersion for adhesive materials, such as adhesive liquids.

For example, the anionic aqueous dispersion of the present invention can also be used for a resorcinol-formaldehyde-latex adhesive liquid containing the anionic aqueous dispersion as a latex component (hereinafter abbreviated as the "RFL adhesive liquid"). The RFL adhesive liquid contains resorcinol, formaldehyde, and a latex component. The latex component contains the anionic aqueous dispersion of the present invention. The RFL adhesive liquid can be used, for example, as an adhesive material for bonding rubber and fibers to form an adhesive body.

The RFL adhesive liquid can be obtained by mixing the anionic aqueous dispersion of the present invention with a resorcinol-formaldehyde resin aqueous solution. The resorcinol-formaldehyde resin aqueous solution is obtained by reacting formaldehyde, a substance easily producing formaldehyde, such as paraformaldehyde, and a phenolic compound, such as resorcinol, by a known method, for example, by reacting them in the presence of an alkali metal hydroxide. Specifically, it is obtained by reacting 0.5 to 4 mol of formaldehyde per mol of resorcinol in an aqueous solution of an alkali metal hydroxide. The resin concentration of the resulting resorcinol-formaldehyde resin aqueous solution is generally about 5 to 40 wt.%.

The anionic aqueous dispersion and the resorcinol-formaldehyde resin aqueous solution can be mixed, for example, so that the chlorosulfonated polyethylene solid content of the anionic aqueous dispersion is 100 to 2000 parts by mass per 100 parts by mass of the resorcinol-formaldehyde resin. In this case, the RFL adhesive liquid has excellent adhesive force. It is preferable to mix them so that the chlorosulfonated polyethylene solid content of the anionic aqueous dispersion is 100 to 1500 parts by mass, and more preferably 100 to 1000 parts by mass, per 100 parts by mass of the resorcinol-formaldehyde resin.

Depending on the type of fiber to be bonded, the RFL adhesive liquid may contain viscosity modifiers; antioxidants; various additives, such as zinc oxide and magnesium compounds; vulcanization accelerators; and adhesion aids, such as chlorophenol formaldehyde condensates, blocked isocyanates, and epoxy compounds. Further, the RFL adhesive liquid can contain latex, such as SBR latex, styrene-butadiene-vinyl pyridine terpolymer latex, NBR latex, and HNBR.

Since the RFL adhesive liquid contains the anionic aqueous dispersion of the present invention, excellent oil resistance and heat resistance can be imparted to adhesive bodies formed after adhesive treatment.

The RFL adhesive liquid can be used, for example, to treat fibers. The thus-treated fibers are obtained as the so-called rubber-reinforcing fibers. The rubber-reinforcing fibers can be formed so as to be bonded to rubber or the like. The rubber-reinforcing fibers can be suitably used as a reinforcing material for improving physical properties, such as rubber strength.

The rubber-reinforcing fiber treated with the RFL adhesive liquid comprises an adhesive component in the RFL adhesive liquid and a fiber. The adhesive component as mentioned herein contains a resorcinol-formaldehyde condensate and the chlorosulfonated polyethylene particles contained in the anionic aqueous dispersion of the present invention. The adhesive component may, for example, adhere to the surface of the fiber or may penetrate into the fiber.

Examples of the fiber constituting the rubber-reinforcing fiber include organic fibers, such as vinylon, nylon, polyester, aromatic polyamide, and rayon; inorganic fibers, such as glass fibers; and the like. The shape of the fiber is not particularly limited, and can be suitably selected from yarn, cords, woven fabrics, or short fibers for reinforcement or flocking, depending on the intended use.

The method for producing the rubber-reinforcing fiber is not particularly limited. For example, fibers can be impregnated with the RFL adhesive liquid containing the anionic aqueous dispersion by a method, such as dipping, coating, spraying, or roll treatment, followed by heating, thereby obtaining rubber-reinforcing fibers. This heat treatment is not particularly limited, and can be the same as a known method. In the obtained rubber-reinforcing fibers, the adhesive component contained in the RFL adhesive liquid is fixed.

The rubber-reinforcing fiber may further have an overcoat layer containing a rubber component. The rubber-reinforcing fiber having an overcoat layer is formed as a rubber-reinforcing fiber composite. Examples of the rubber component include HNBR, chloroprene rubber, chlorosulfonated polyethylene, NBR rubber, EPDM, SBR, IR, and natural rubber. Of these, chlorosulfonated polyethylene is preferable.

The rubber-reinforcing fiber composite comprises the rubber-reinforcing fiber and an overcoat layer containing a rubber component, and is thus has particularly excellent adhesion to various types of rubber, such as EPDM, IR, natural rubber, IIR, SBR, NBR, HNBR, and halogenated rubber. Therefore, the rubber-reinforcing fiber composite is particularly suitable as a reinforcing material for various types of rubber.

The method for forming the overcoat layer on the rubber-reinforcing fiber is not particularly limited, and known methods can be widely used. An overcoat agent containing a rubber component is used to form the overcoat layer. For example, the overcoat layer can be formed by applying the overcoat agent to the surface of the rubber-reinforcing fiber, followed by drying. The application and drying of the overcoat agent may be repeated. Alternatively, the overcoat layer can be formed by a method of dipping the rubber-reinforcing fiber in the overcoat agent. The thickness of the overcoat layer is not particularly limited, and is 5 to 100 $\mu$m, for example.

The components contained in the overcoat agent may be, for example, the same as those known in the art, and may contain a crosslinking agent, carbon black, a solvent, an adhesive, etc., in addition to the rubber component. The overcoat agent may be a commercially available product or the like. Examples of the rubber component contained in the overcoat agent include chlorosulfonated polyethylene, which may be of a type different from the chlorosulfonated polyethylene contained in the anionic aqueous dispersion of the present invention.

As described above, the anionic aqueous dispersion of the present invention is suitable as an adhesive liquid used for bonding various fibers, such as glass fibers and organic fibers. In particular, the anionic aqueous dispersion of the present invention can be particularly suitably used as a latex component of the RFL adhesive liquid etc., and can impart excellent oil resistance and heat resistance after adhesion.

Further, the anionic aqueous dispersion of the present invention can be used as a binder material for various plastics, a coating material, or a material such as a fiber treatment agent. For example, the anionic aqueous dispersion of the present invention can be used as a material for producing various molded products, such as automotive timing belts and brake hoses, coatings, window frames, and fiber composite materials.

Examples

The present invention is described in more detail below with reference to Examples; however, the present invention is not limited to these Examples.

Example 1

In a separable flask having an inner volume of 500 mL, 100 parts by mass of chlorosulfonated polyethylene comprising 43 mass% of a chlorine-containing structural unit and 645 parts by mass of toluene were added and stirred at 70°C for 4 hours for dissolution. To the thus-obtained toluene solution (solution A), an aqueous solution (solution B), in which 1.0 part by mass of potassium oleate salt and 4.2 parts by mass of sodium polyoxyethylene alkyl ether sulfate salt (number of carbon atoms of alkyl: 12 to 14) were dissolved as anionic surfactants in 370 parts by mass of water, was added. The toluene solution to which the aqueous solution was added was stirred and mixed with a homomixer ("Mark II Model 2.5," produced by Primix Corporation) for 6 minutes to obtain an emulsion. The number of rotations and the temperature during stirring and mixing with the homomixer were set to 12000 rpm and 40°C, respectively.

After the obtained emulsion was heated to 40 to 70°C under a reduced pressure of 40 to 90 kPa to remove the toluene, 2 parts by mass of sodium dibutyldithiocarbamate was added as a vulcanization accelerator, thereby obtaining an anionic aqueous dispersion having a solid content concentration of 40 mass%. The median average particle size of the obtained anionic aqueous dispersion was 0.8 $\mu$m. The median average particle size was measured using a diffraction-type particle size distribution analyzer (trade name "SALD-2300," Shimadzu Corporation).

Further, the chlorosulfonated polyethylene used in Example 1 showed an endothermic peak at around 60°C in differential scanning calorimetry at a temperature rising from 30°C to 200°C at 10°C/min.

Example 2

An anionic aqueous dispersion was obtained in the same manner as in Example 1, except that the amount of sodium dibutyldithiocarbamate was changed to 1 part by mass.

Example 3

An anionic aqueous dispersion was obtained in the same manner as in Example 1, except that sodium dibutyldithiocarbamate was not added.

### Example 4

An anionic aqueous dispersion was obtained in the same manner as in Example 1, except that the amount of sodium dibutyldithiocarbamate was changed to 0.3 parts by mass.

### Example 5

An anionic aqueous dispersion was obtained in the same manner as in Example 1, except that the amount of sodium dibutyldithiocarbamate was changed to 0.5 parts by mass.

### Example 6

An anionic aqueous dispersion was obtained in the same manner as in Example 5, except that water-insoluble 1,3-di-o-tolylguanidine (guanidine-based vulcanization accelerator) was used as a vulcanization accelerator, instead of water-soluble sodium dibutyldithiocarbamate.

### Example 7

An anionic aqueous dispersion was obtained in the same manner as in Example 5, except that water-insoluble zinc dibutyldithiocarbamate (dithiocarbamic acid-based vulcanization accelerator) was used as a vulcanization accelerator, instead of water-soluble sodium dibutyldithiocarbamate.

### Example 8

An anionic aqueous dispersion was obtained in the same manner as in Example 5, except that a water-insoluble 2-mercaptobenzothiazole zinc salt (thiazole-based vulcanization accelerator) was used as a vulcanization accelerator, instead of water-soluble sodium dibutyldithiocarbamate.

### Example 9

An anionic aqueous dispersion was obtained in the same manner as in Example 5, except that water-insoluble dipentamethylenethiuram tetrasulfide (tyraum-based vulcanization accelerator) was used as a vulcanization accelerator, instead of water-soluble sodium dibutyldithiocarbamate.

### Comparative Example 1

An anionic aqueous dispersion was obtained in the same manner as in Example 1, except that the chlorosulfonated polyethylene comprising 43 mass% of a chlorine-containing structural unit was changed to chlorosulfonated polyethylene comprising 23 mass% of a chlorine-containing structural unit.

### Comparative Example 2

An anionic aqueous dispersion was obtained in the same manner as in Example 1, except that the chlorosulfonated polyethylene comprising 43 mass% of a chlorine-containing structural unit was changed to chlorosulfonated polyethylene comprising 23 mass% of a chlorine-containing structural unit, and that sodium dibutyldithiocarbamate was not added.

### Comparative Example 3

An anionic aqueous dispersion was obtained in the same manner as in Example 1, except that the chlorosulfonated polyethylene comprising 43 mass% of a chlorine-containing structural unit was changed to chlorosulfonated polyethylene comprising 36 mass% of a chlorine-containing structural unit.

### Measurement of chlorine amount

The amount of chlorine in the chlorosulfonated polyethylene was determined by absorbing the chlorosulfonated polyethylene into an aqueous hydrazinium sulfate solution by an oxygen combustion method, and quantifying chloride ions by a potentiometric titration method using an aqueous silver nitrate solution. AT-610 (produced by Kyoto Electronics Manufacturing Co., Ltd.) was used for the measurement. Of the ethylene-chloroethylene-chlorosulfonated ethylene structure, the masses of a chloroethylene structural unit and a chlorosulfonated ethylene structural unit were calculated from the obtained quantitative values, and the content ratio of the chlorine-containing structural unit was derived.

Test Example 1

In an aqueous solution in which 5 g of sodium hydroxide was dissolved in 2.42 kg of water, 0.11 kg of resorcinol and 0.16 kg of 37% formaldehyde were mixed and dissolved, and the mixture was kept at 30°C for 5 hours to obtain a resorcinol-formaldehyde resin aqueous solution.

269 g of the resorcinol-formaldehyde resin aqueous solution and 152 g of water were mixed with 265 g of the anionic aqueous dispersion obtained in Example 1, and the mixture was kept at 30°C for 2 hours to obtain an RFL adhesive liquid.

While a fiber cloth (10 cm x 10 cm x 0.2 mm) made of nylon 66 fibers was dipped in the RFL adhesive liquid, the RFL adhesive liquid was heated at 150°C for 3 minutes. Thereafter, the fiber cloth treated with the RFL adhesive liquid was taken out, and the fiber cloth was further dipped in an overcoat agent A ("Chemlok 6108 (registered trademark)," produced by LORD Japan Inc., containing chlorosulfonated polyethylene) and heated at 70°C for 10 minutes.

Two fiber cloths treated sequentially with the RFL adhesive liquid and the overcoat agent A as described above were prepared, and three HNBR compound sheets (10 cm x 10 cm x 2 mm) were prepared as rubber sheets. The two fiber cloths and three HNBR compound sheets were alternately laminated to form a laminate having a five-layer structure (rubber sheet/fiber cloth/rubber sheet/fiber cloth/rubber sheet). The laminate was vulcanized and bonded by pressing at 150°C for 20 minutes to obtain an adhesive body comprising rubber sheets and fiber cloths.

Test Example 2

An adhesive body was obtained in the same manner as in Test Example 1, except that the HNBR compound sheet was changed to an EPDM compound sheet.

Test Example 3

An adhesive body was obtained in the same manner as in Test Example 1, except that dipping in the overcoat agent A was not performed.

Test Example 4

An adhesive body was obtained in the same manner as in Test Example 2, except that dipping in the overcoat agent A was not performed.

Tables 1 and 2 show the compositions of the HNBR compound sheet and EPDM compound sheet used in the Test Examples, respectively.

Table 1

| Component | Content (part by mass) |
|---|---|
| HNBR | 100 |
| ZnO | 2.0 |
| Stearic acid | 1.0 |
| Carbon black | 50.0 |
| Process oil | 5.0 |
| Sulfur | 0.5 |
| Tetramethylthiuram disulfide | 2.0 |
| Styrenated diphenylamine | 2.0 |
| 2-Mercaptobenzothiazole zinc salt | 1.0 |
| N-Cyclohexyl-2-benzothiazolesulfenamide | 0.5 |

Table 2

| Component | Content (part by mass) |
|---|---|
| EPDM | 100 |
| ZnO | 5.0 |
| Stearic acid | 1.0 |
| Process oil | 10.0 |
| Sulfur | 1.0 |
| Zinc dibutyldithiocarbamate | 1.0 |
| Sodium dibutyldithiocarbamate | 1.0 |
| 2-Mercaptobenzothiazole | 0.5 |

Evaluation

The heat resistance and oil resistance of each of the aqueous dispersions obtained in the Examples and Comparative Examples were evaluated as shown below.

Heat resistance

A film was formed by drying 20 g of the anionic aqueous dispersion obtained in each Example, Comparative Example, and Reference Example at 60°C for 24 hours in a 120-mm-diameter petri dish. This film was further heated at 120°C for 2 hours (hereinafter, this heat treatment is referred to as "the first heat treatment"). By the first heat treatment, the film containing a vulcanization accelerator was changed to a vulcanized film.
The film subjected to the first heat treatment was further heated in an air atmosphere at 140°C for 100 hours (hereinafter, this heat treatment is referred to as "the second heat treatment").
For each of the film obtained by the first heat treatment and the film obtained by the second heat treatment, the tensile strength at break of the film was measured using a testing machine ("AGS-J," Shimadzu Corporation) at a tensile speed of 200 mm/min and an angle of 180 degrees. Then, the rate of change (%) in the tensile strength at break was determined by the following formula:

$$\{(T1-T2)/T1\} \times 100 \ (\%)$$

(wherein T1 is the tensile strength at break of the film obtained by the first heat treatment, and T2 is the tensile strength at break of the film obtained by the second heat treatment.) A ratio of more than 70% and 75% or less was determined to be "good heat resistance," a ratio of 70% or less was determined to be "better heat resistance," and a ratio of 40% or less was determined to be "particularly good heat resistance."

Oil resistance

A film was formed by drying 20 g of the aqueous dispersion obtained in each Example, Comparative Example, and Reference Example at 60°C for 24 hours in a 120-mm-diameter petri dish. This film was further heated at 120°C for 2 hours (hereinafter, this heat treatment is referred to as "the first heat treatment"). By the first heat treatment, the film containing a vulcanization accelerator was changed to a vulcanized film.
2 g of the obtained film was dipped in 30 g of IRM903 (test lubricating oil No. 3) at 150°C for 24 hours. The mass of the sheet before and after dipping was measured, and the oil resistance was evaluated from the rate of increase in mass due to dipping. A lower mass increase rate can be determined to indicate better oil resistance. The oil resistance was evaluated as excellent when the mass increase rate was 40% or less. The mass increase rate was calculated by the following formula:

$$\{(M2-M1)/M1\} \times 100 \ (\%)$$

(wherein M1 is the film mass before the oil resistance test, and M2 is the film mass after the oil resistance test.) A calculated value of 40% or less was determined to be "good oil resistance."

Further, the adhesive bodies obtained in the Test Examples were subjected to the following adhesion evaluations 1 and 2.

Adhesion evaluation 1

Each adhesive body was cut into a width of 25 mm, and the rubber sheet and the fiber cloth were separated using a testing machine ("AGS-J," Shimadzu Corporation) to measure the peel strength. The measurement conditions were a tension speed of 50 mm/min and an angle of 180 degrees. A peel strength of 150 N/25 mm or more was determined to be "better adhesive force," and a peel strength of 200 N/25 mm or more was determined to be "particularly excellent adhesive force."

Adhesion evaluation 2

The area of the rubber adhering to the fiber cloth after the measurement of adhesion evaluation 1 was visually measured, and the ratio of the total area of the rubber adhering to the fiber cloth to the area of the fiber cloth was calculated as a rubber adhesion ratio (%). The adhesive strength was evaluated from this value. Since the degree of destruction of the rubber sheet was larger at a higher rubber adhesion ratio, it indicated that the adhesive force between the fiber cloth and the rubber sheet was larger. When the rubber adhesion ratio was visually recognized as 50% or more and less than 80%, this case was determined to be "better adhesive force," and when the rubber adhesion ratio was visually recognized as 80% or more, this case was determined to be "particularly excellent adhesive force."

Table 3 shows the evaluation results of the heat resistance and oil resistance of the films obtained from the anionic aqueous dispersions of Examples 1 to 4 and Comparative Examples 1 to 3, Table 4 shows the evaluation results of the heat resistance of the films obtained from the anionic aqueous dispersions of Examples 5 to 9, and Table 5 shows the evaluation results of adhesion evaluations 1 and 2.

Table 3

| Example/ Comparative Example | Oil resistance (mass increase rate) (%) | Heat resistance (rate of change in strength) (%) |
|---|---|---|
| Example 1 | 30 | 10 |
| Example 2 | 30 | 20 |
| Example 3 | 30 | 68 |
| Example 4 | 30 | 60 |
| Comparative Example 1 | Unmeasurable (dissolved) | 10 |
| Comparative Example 2 | Unmeasurable (dissolved) | 60 |
| Comparative Example 3 | 57 | - |

Table 4

| Example | Heat resistance (rate of change in strength) (%) |
|---|---|
| Example 5 | 12 |
| Example 6 | 69 |
| Example 7 | 71 |
| Example 8 | 46 |
| Example 9 | 75 |

Table 5

| Test Example | Adhesion evaluation 1 Peel strength (N/25 mm) | Adhesion evaluation 2 Rubber adhesion amount (%) |
|---|---|---|
| Test Example 1 | 250 | 100 |
| Test Example 2 | 270 | 100 |
| Test Example 3 | 180 | 70 |
| Test Example 4 | 90 | 0 |

Table 3 revealed that the anionic aqueous dispersion obtained in each Example could form a film having excellent heat resistance and oil resistance. In particular, it was revealed that the heat resistance depended on the amount of vulcanization accelerator contained in the anionic aqueous dispersion. In contrast, all of the anionic aqueous dispersions obtained in the Comparative Examples had insufficient oil resistance. In particular, in Comparative Examples 1 and 2, the oil resistance was so poor that the films were dissolved, and it was difficult to measure the oil resistance.

Table 4 revealed that when the vulcanization accelerator contained in the anionic aqueous dispersion was water-soluble, the resulting film had particularly excellent heat resistance.

The results shown in Table 5 revealed that the adhesive bodies formed using fiber cloths treated sequentially with the RFL adhesive liquid and the overcoat agent A had particularly excellent adhesive force.

The present invention may be embodied in various other forms without departing from the spirit or essential characteristics thereof. Therefore, the embodiments and Examples described above are merely examples in every aspect, and should not be construed as limiting. The scope of the present invention is defined by the claims, and is not limited by the text of the specification. Further, all modifications and changes belonging to the equivalent scope of the claims are within the scope of the present invention.

Industrial Applicability

According to the anionic aqueous dispersion of the present invention, a molded article (e.g., a film) having excellent heat resistance and oil resistance can be formed. Therefore, the anionic aqueous dispersion of the present invention is suitable, for example, as an adhesive liquid for rubber-reinforcing fibers, and can be suitably used as a material for forming a rubber-reinforcing fiber composite having excellent adhesive force between fibers and rubber.

**Claims**

1. An anionic aqueous dispersion of chlorosulfonated polyethylene particles comprising an aqueous medium, chlorosulfonated polyethylene particles, and an anionic surfactant,
chlorosulfonated polyethylene contained in the chlorosulfonated polyethylene particles comprising 40 to 60 mass% of a structural unit having chlorine.

2. The anionic aqueous dispersion according to claim 1, wherein the chlorosulfonated polyethylene has a property of exhibiting one or more endothermic peaks in the range of 50 to 100°C in differential scanning calorimetry at a temperature rising from 30°C to 200°C at 10°C/min.

3. The anionic aqueous dispersion according to claim 1 or 2, further comprising a vulcanization accelerator.

4. The anionic aqueous dispersion according to any one of claims 1 to 3, wherein the vulcanization accelerator comprises at least one compound selected from the group consisting of thiazole compounds, thiuram compounds, and dithiocarbamate compounds.

5. The anionic aqueous dispersion according to any one of claims 1 to 4, wherein the vulcanization accelerator is contained in an amount of 0.5 to 5 parts by mass per 100 parts by mass of the chlorosulfonated polyethylene particles.

6. The anionic aqueous dispersion according to any one of claims 1 to 5, wherein the anionic surfactant comprises at least one member selected from the group consisting of dialkyl sulfosuccinates, polyoxyalkylene alkyl ether sulfates, fatty acid salts, and alkylbenzene sulfonates.

7. The anionic aqueous dispersion according to any one of claims 1 to 6, wherein the anionic surfactant is contained in an amount of 0.5 to 15 parts by mass per 100 parts by mass of the chlorosulfonated polyethylene particles.

8. A method for producing an anionic aqueous dispersion of chlorosulfonated polyethylene particles, the method comprising:

    obtaining an emulsion by mixing solution A, in which chlorosulfonated polyethylene is dissolved in an organic solvent, and solution B, in which an anionic surfactant is dissolved in an aqueous medium, and removing the organic solvent from the emulsion;
    wherein the chlorosulfonated polyethylene comprises 40 to 60 mass% of a structural unit having chlorine.

9. A molded article comprising a dried product of the anionic aqueous dispersion according to any one of claims 1 to 7.

10. A resorcinol-formaldehyde-latex adhesive liquid comprising the anionic aqueous dispersion according to any one of claims 1 to 7 as a latex component.

11. A rubber-reinforcing fiber comprising an adhesive component in the adhesive liquid according to claim 10 and a fiber.

12. A rubber-reinforcing fiber composite comprising the rubber-reinforcing fiber according to claim 11 and an overcoat layer containing a rubber component.

**INTERNATIONAL SEARCH REPORT**

| International application No. |
|---|
| PCT/JP2018/043311 |

| A. CLASSIFICATION OF SUBJECT MATTER |
|---|
| Int.Cl. C08L23/34(2006.01)i, C08J3/07(2006.01)i, C09J123/34(2006.01)i, C09J161/12(2006.01)i, D06M15/227(2006.01)i, D06M15/41(2006.01)i |

According to International Patent Classification (IPC) or to both national classification and IPC

| B. FIELDS SEARCHED |
|---|
| Minimum documentation searched (classification system followed by classification symbols) |
| Int.Cl. C08L23/34, C08J3/07, C09J123/34, C09J161/12, D06M15/227, D06M15/41 |

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 57-105476 A (SEITETSU KAGAKU CO., LTD.) 30 June 1982, claims, page 3, upper left column, line 13 to page 4, lower right column, line 3, examples 1–6, 10–17 (Family: none) | 1–12 |
| A | JP 11-158744 A (NIPPON GLASS FIBER CO., LTD.) 15 June 1999, claims, paragraph [0022], examples (Family: none) | 1–12 |
| A | JP 2006-104595 A (CENTRAL GLASS CO., LTD.) 20 April 2006, claims, paragraph [0031] & US 2008/0280715 A1, claims, paragraph [0036] & WO 2006/038490 A1 & EP 1795645 A1 | 1–12 |
| A | JP 9-111669 A (ASAHI FIBER GLASS CO., LTD.) 28 April 1997, claims, paragraph [0017] (Family: none) | 1–12 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 February 2019 (15.02.2019) | 26 February 2019 (26.02.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010031194 A
- JP 5816397 B
- JP 5890950 B